# EUROPÄISCHE PATENTSCHRIFT

(11) **EP 1 420 424 B1**
(45) Veröffentlichungstag und Bekanntmachung des Hinweises auf die Patenterteilung: **18.07.2007**
(21) Anmeldenummer: 03022075.0
(22) Anmeldetag: 02.10.2003
(51) Int. Cl.: H01H 25/04, B60Q 1/14

(54) **Lenkstockschalter**
Steering column stalk switch
Commutateur de colonne de direction

(30) Priorität: 12.11.2002 DE 10252378
(43) Veröffentlichungstag der Anmeldung: 19.05.2004
(73) Patentinhaber: Valeo Schalter und Sensoren GmbH, 74321 Bietigheim-Bissingen (DE)
(72) Erfinder: Bosch, Jürgen, 86757 Wallerstein (DE); Brunner, Erhard, 86720 Nördlingen-Löpsingen (DE); Kleinle, Martin, 86709 Wolferstadt (DE); Simonis, Karl, 75428 Illingen (DE); Lipfert, Rainer, 74076 Heilbronn (DE)
(74) Vertreter: Dreiss, Fuhlendorf, Steimle & Becker

(56) Entgegenhaltungen:
- EP-A- 0 887 230
- FR-A- 2 747 834
- US-A- 5 440 085
- US-A- 5 742 014

## Beschreibung

Die Erfindung betrifft einen Lenkstockschalter für ein Fahrzeug, mit einer Schalteinheit, deren in zwei quer, insbesondere etwa senkrecht zueinander verlaufenden Schwenkebenen schwenkbar gelagerter Schalthebel mit Schaltkontakte aufweisenden Schaltgliedern derart gekoppelt ist, dass die Schaltkontakte je nach Arbeitstellung des Schalthebels Anschlusskontakte wenigstens eines Leiterbahnenträgers beaufschlagen, wobei der den Schaltgliedern zugewandte Bereich des Schalthebels Kontaktstellen aufweist, die von schaltgliedseitig angeordneten, eine elektrische Verbindung zum Leitbahnenträger herstellenden Kontaktelementen abgegriffen werden.

Aus der FR 2747834 A1 ist ein Lenkstockschalter bekannt geworden, bei dem ein Schaltglied je nach Arbeitstellung des Schalthebels auf dem einzigen, eben ausgebildeten Leiterbahnenträger in eine entsprechende Schaltstellung verschoben wird. Wird der Schalthebel um eine senkrecht zum Leiterbahnenträger verlaufende Achse geschwenkt, so wird das Schaltglied ebenfalls um diese Achse gegenüber dem Leiterbahnenträger verschwenkt. Wird hingegen das Schaltglied um eine parallel zum Leiterbahnenträger verlaufende Achse verschwenkt, so wird das Schaltglied über einen Umlenkmechanismus entlang einer geraden Linie über den Leiterbahnenträger geführt. Dieser Stand der Technik hat den Nachteil, dass relativ viel Bauraum beansprucht wird. Insbesondere ist eine relativ große Oberfläche des Leiterbahnenträgers zur Verfügung zu stellen, damit die Schaltkontakte des Schaltgliedes in allen Arbeitstellungen des Schalthebels die entsprechenden Anschlusskontakte des Leiterbahnenträgers kontaktieren können.

Aus der DE 199 58 507 A1 ist ein Lenkstockschalter bekannt geworden, bei dem allerdings zwei rechtwinklig zueinander angeordnete, eben ausgebildete, Leiterbahnenträger vorgesehen sind. Beim Schwenken des Schalthebels in der einen Schwenkebene kontaktiert hierbei ein Schaltglied die Anschlusskontakte des einen Leiterbahnenträgers, und beim Schwenken des Schalthebels in der anderen Schwenkebene werden die Anschlusskontakte des anderen Leiterbahnenträgers beaufschlagt. Durch die Verwendung von zwei rechtwinklig zueinander angeordneten Leiterbahnenträger ist zusätzlicher Bauraum und sind zusätzliche Bauteile erforderlich.

Bei diesem Stand der Technik weist das den Schaltgliedern zugewandte Ende des Schalthebels Kontaktstellen auf, die von Kontaktelementen abgegriffen werden. Über die Kontaktstellen, beziehungsweise Kontaktelemente, können am freien Ende des Schalthebels vorhandene Schaltereinheiten mit Strom versorgt werden können. Die Kontaktelemente stellen einen elektrischen Kontakt zum Leiterbahnenträger dar. Die Kontaktelemente werden über Schenkel gegen die Kontaktstellen vorgespannt, wobei die Schenkel zum Ausgleich der Schwenkbewegung des Schalthebels in der Schwenkbewegung des Schalthebels folgenden Langlöchern geführt werden. Eine derartige Führung der Schenkel benötigt zusätzliche Bauteile und damit entsprechenden Bauraum.

Aus der US-A- 5 440 085 ist bekannt geworden, schaltgliedseitige Kontaktelemente vorzusehen, deren schalthebelseitig angeordnete Kontaktstellen beaufschlagenden Enden senkrecht unterhalb der Schwenkachse des Schalthebels liegen.

Der vorliegenden Erfindung liegt deshalb die Aufgabe zugrunde, einen Lenkstockschalter, wie er beispielsweise aus der US-A-5 440 085 bekannt geworden ist, dahingehend weiterzubilden, dass insbesondere Bauraum eingespart wird. Dabei soll die Kontaktierung der Kontaktstellen und die Anordnung der Kontaktelemente vereinfacht werden.

Diese Aufgabe wird mit einem Lenkstockschalter mit den Merkmalen des Anspruchs 1 gelöst. Dies hat den Vorteil, dass sich die Lage der an den Kontaktstellen des Schalthebels anliegenden freien Enden der Kontaktelemente beim Verschwenken des Schalthebels um die parallel zum Leiterbahnenträger verlaufende Achse nur geringfügig ändert. Der Weg, um den die Enden der Kontaktfedern beim Verschwenken des Schalthebels nachgeführt werden müssen, ist sehr gering. Eine federnde Vorspannung der Kontaktelemente kann folglich so ausgelegt werden, dass sie nur diesen geringen Weg auszugleichen hat. Eine Aufwendige Führung der Kontaktelemente, wie sie beim bekannten Stand der Technik vorgesehen ist, entfällt.

Die Erfindung sieht ferner vor, dass die Kontaktelemente an einem um eine senkrecht zum Leiterbahnenträger verlaufende Drehachse drehbar gelagerten Drehschaltglied derart angeordnet sind, dass die dem Leiterbahnenträger zugewandten Enden der Kontaktelemente im Bereich der Drehachse des Drehschaltglieds liegen. Die Anschlusskontakte sind folglich zentrisch angeordnet. Dies hat den Vorteil, dass beim Verschwenken des Schalthebels um die senkrecht zum Leiterbahnenträger verlaufende Schwenkachse die dem Leiterbahnenträger zugewandten Enden der Kontaktelemente einen minimalen Weg auf dem Leiterbahnenträger zurücklegen. Dadurch können die Anschlusskontakte für die dem Leiterbahnenträger zugewandten Enden der Kontaktelemente relativ klein gehalten werden. Dies führt wiederum zu einem klein bauenden Leiterbahnenträger. Hierbei ist es vorteilhaft, wenn das Drehschaltglied exzentrisch gelagert angeordnet ist.

Vorteilhafterweise sind die den Leiterbahnenträger kontaktierenden Enden der Kontaktelemente lotrecht zum Leiterbahnenträger unterhalb der Schwenkachse des Schalthebels angeordnet. Dies hat den Vorteil, dass die Kontaktelemente sehr klein und platzsparend ausgeführt werden können. Ferner können sie weitgehend symmetrisch ausgebildet sein, da die Ebene, die durch die dem Schalthebel zugewandten Enden und durch die dem Leiterbahnenträger zugewandten Enden der Kontaktelemente definiert wird, weitgehend senkrecht zu dem Leiterbahnenträger verläuft.

Bei einer Ausgestaltung der Erfindung ist vorgesehen, dass die Kontaktelemente gegenüber der Schwenkbewegungen des Schalthebels um die Schwenkachse ortsfest angeordnet sind, wobei die dem Schalthebel zugewandten Enden der Kontaktelemente unter federnder Vorspannung der Schwenkbewegung der Kontaktstellen folgen und diese beaufschlagen. Die Kontaktelemente sind hierbei vorteilhafterweise am Drehschaltglied befestigt.

Ein weitere Ausführungsform der Erfindung sieht vor, dass der Leiterbahnenträger auf seiner Oberseite und seiner Unterseite Anschlusskontakte aufweist, die je nach Arbeitsstellung des Schalthebels entsprechend kontaktiert werden. Dies hat den Vorteil, dass im Gegensatz zu dem bekannten Stand der Technik nicht nur lediglich eine Seite des Leiterbahnenträgers für die Kontaktierung der Schaltkontakte der Schaltglieder Verwendung findet, sondern dass sowohl die Oberseite als auch die Unterseite des Leiterbahnenträgers Anschlusskontakte für die Schaltkontakte der Schaltglieder aufweist. Hierdurch kann insbesondere der für die entsprechende Schalteinheit relevante Bereich des Leiterbahnenträgers in seinen Abmessungen wesentlich verkleinert werden. Ein derartiger Lenkstockschalter baut folglich kompakter.

Der Leiterbahnenträger mit Anschlusskontakten kann hierbei als Leiterplatte, Leiterfolie, Stanzgitter oder dergleichen ausgebildet sein. Je nach Art des Lenkstockschalters kann vorgesehen sein, dass der Leiterbahnenträger weitgehend senkrecht zur Lenkstockachse verläuft.

Ein vorteilhafter Lenkstockschalter ergibt sich dann, wenn die für ein Bewegen des Schalthebels in der einen Schwenkebene liegenden relevanten Anschlusskontakte auf der Oberseite beziehungsweise Unterseite des Leiterbahnenträgers liegen und wenn die für ein Bewegen des Schalthebels in der anderen Schwenkebene relevanten Anschlusskontakte auf der Unterseite beziehungsweise Oberseite des Leiterbahnenträgers liegen. Dabei ist vorteilhaft, wenn die Anschlusskontakte, die bei einem Schwenken des Betätigungshebels parallel zum Leiterbahnenträger beaufschlagt werden, auf der Oberseite, das heißt auf der dem Schalthebel zugewandten Seite des Leiterbahnenträgers liegen und wenn die Anschlusskontakte, die dann beaufschlagt werden, wenn der Schalthebel senkrecht zum Leiterbahnenträger verschenkt wird, auf der Unterseite des Leiterbahnenträgers liegen.

Ebenfalls vorteilhaft ist, wenn ein als Schiebeschaltglied ausgebildetes Schaltglied vorgesehen ist, das über einen Umlenkmechanismus mit dem Schalthebel derart gekoppelt ist, dass durch Bewegen des Schalthebels in der anderen Schwenkebene, die insbesondere senkrecht zum Leiterbahnenträger verläuft, das Schiebeelement entlang einer Linie verschiebbar an dem Leiterbahnenträger angeordnet ist. Das Schiebeelement ist hierbei vorteilhafterweise auf der Unterseite des Leiterbahnenträgers, also auf der dem Schalthebel abgewandten Seite des Leiterbahnenträgers, angeordnet.

Ein vorteilhafter Lenkstockschalter ergibt sich folglich dann, wenn auf der Oberseite des Leiterbahnenträgers ein Drehschaltglied und auf der Unterseite des Leiterbahnenträgers das Schiebeschaltglied vorgesehen ist. Je nach Betätigungsrichtung des Schalthebels wird folglich das Drehschaltglied und/oder das Schiebeschaltglied betätigt.

Vorteilhafterweise weist der Umlenkmechanismus ein um eine zum Leiterbahnenträger parallele Achse schwenkbares Fußteil, zur Anordnung des freien Endes des Schalthebels, und ein mit dem Fußteil einstückig ausgebildetes oder bewegungsgekoppeltes Umlenkglied auf, welches mit dem Schiebeschaltglied gekoppelt ist. Der Schalthebel kann hierbei entweder lösbar oder unlösbar oder einstückig mit dem Fußteil verbunden sein. Dabei kann der Schalthebel als einzelne Baugruppe vormontiert werden und erst in der Endmontage in das Fußteil eingeschoben werden. Dies führt zu einer flexiblen und kostengünstigen Montage des Lenkstockschalters.

Vorteilhafterweise ist das Fußteil und/oder das Umlenkglied am Drehschaltglied um eine parallel zum Leiterbahnenträger verlaufende Achse schwenkbar gelagert angeordnet. Hierbei ist denkbar, dass sowohl das Fußteil als auch das Umlenkglied jeweils um eine Achse verschwenkbar gelagert ist, wobei die beiden Achsen parallel zueinander und parallel zum Leiterbahnenträger verlaufen.

Dabei ist denkbar, dass die Bewegungskopplung zwischen dem Fußteil und dem Umlenkglied eine Getriebekopplung ist. Die Getriebekopplung kann beispielsweise durch eine Hebelkopplung, eine Reibkopplung oder durch eine Verzahnung des Fußteiles mit dem Umlenkglied realisiert sein. Vorteilhafterweise ist die Getriebekopplung eine Untersetzung, wobei eine kleine Schwenkbewegung des Schalthebels in eine größere Schwenkbewegung des Umlenkgliedes untersetzt wird. Dies trägt zu größeren Verstellwegen des entsprechenden Schaltgliedes auf der entsprechenden Seite des Leiterbahnenträgers bei.

Vorteilhafterweise hinter-, um- oder durchgreift das Umlenkglied den Leiterbahnenträger, wobei das Schiebeschaltglied auf der anderen Seite des Leiterbahnenträgers als das Drehschaltglied angeordnet ist. Dabei kann insbesondere vorgesehen sein, dass der Leiterbahnenträger eine Aussparung für das den Leiterbahnenträger durchgreifende Umlenkglied aufweist. Die Aussparung ist dabei vorteilhafterweise so ausgebildet, dass das Umlenkglied beim Verschwenken des Schalthebels nicht in Berührkontakt mit dem Leiterbahnenträger kommt.

Eine weitere, besonders bevorzugte Ausführungsform der Erfindung zeichnet sich dadurch aus, dass das Fußteil als ein von dem Schalthebel separates Bauteil ausgebildet ist.

Vorteilhafterweise weist das Drehschaltglied in dem seiner Drehachse fern gelegenen Bereich Schaltkontakte auf. Aufgrund des relativ großen Abstandes zur Drehachse legen diese Schaltkontakte beim Verschwenken des Drehschaltgliedes um seine Achse einen relativ weiten Weg zurück. Die Schaltkontakte können hierbei je nach Stellung des Schalthebels beziehungsweise des Drehschaltgliedes verschiedene auf dem Leiterbahnenträger angeordnete Anschlusskontakte beaufschlagen.

Weitere Vorteile und vorteilhafte Einzelheiten der Erfindung sind der nachfolgenden Beschreibung zu entnehmen, in der die Erfindung anhand des in der Figur dargestellten Ausführungsbeispieles näher beschrieben und erläutert ist.

Es zeigen:
- Figur 1: eine Schalteinheit eines erfindungsgemäßen Lenkstockschalters in Seitenansicht;
- Figur 2: die Schalteinheit gemäß Figur 1 im Längsschnitt;
- Figur 3: die Schalteinheit gemäß Figur 1 und 2 in Explosionsdarstellung;

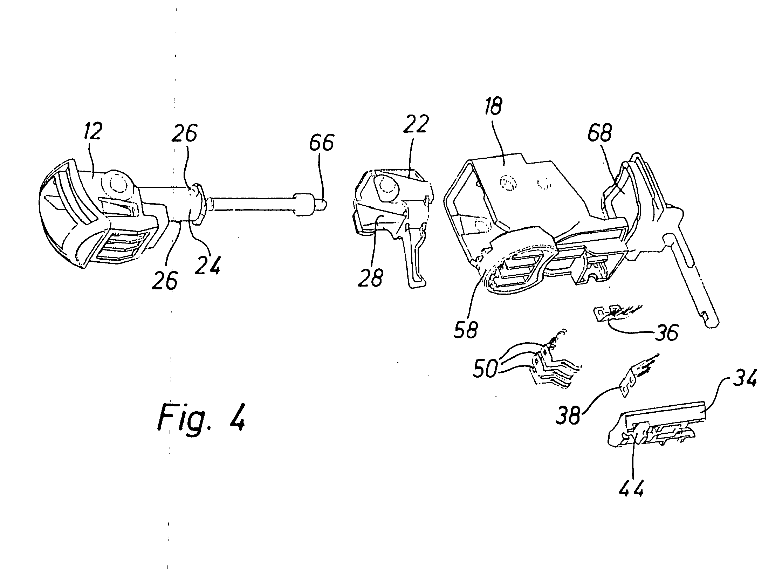

- Figur 4: die Schalteinheit gemäß Figur 3 in Ansicht von schräg unten; und

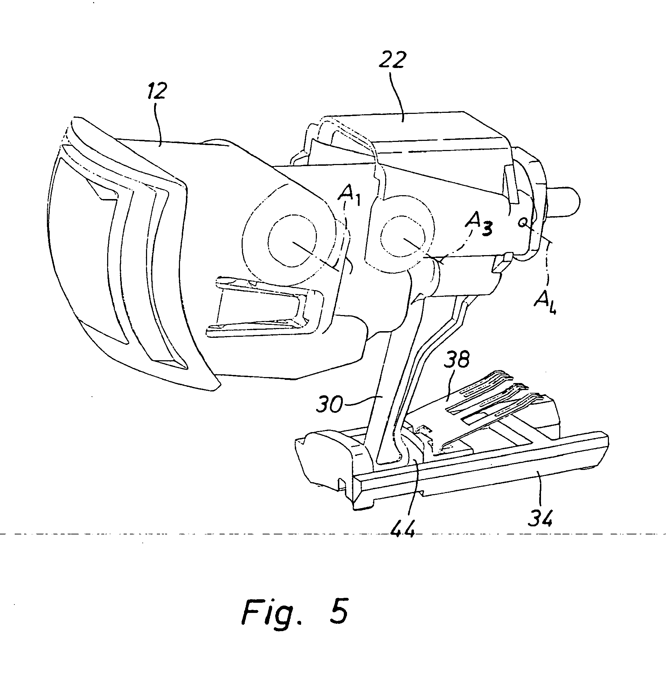

- Figur 5: Einzelteile der Schalteinheit gemäß Figur 4 in perspektivischer Ansicht.

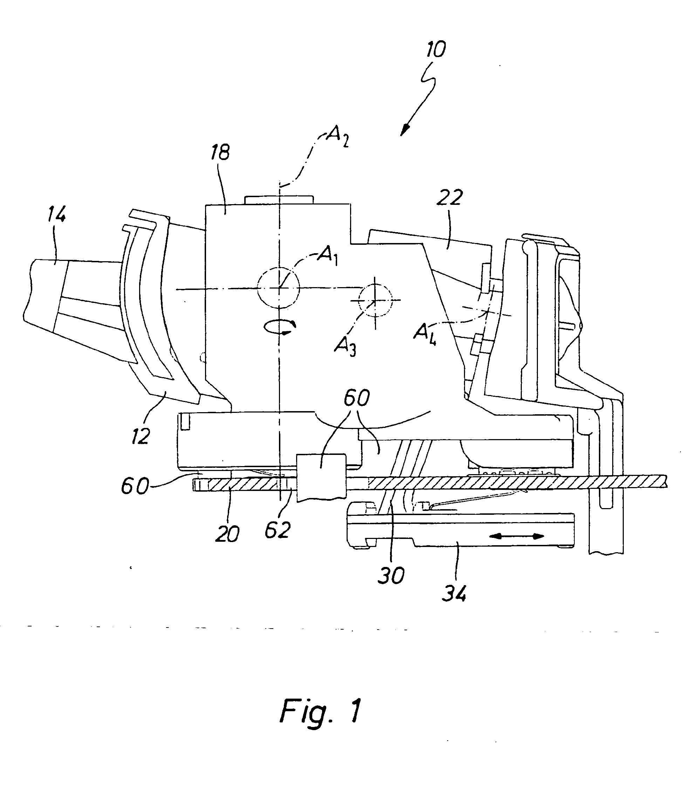

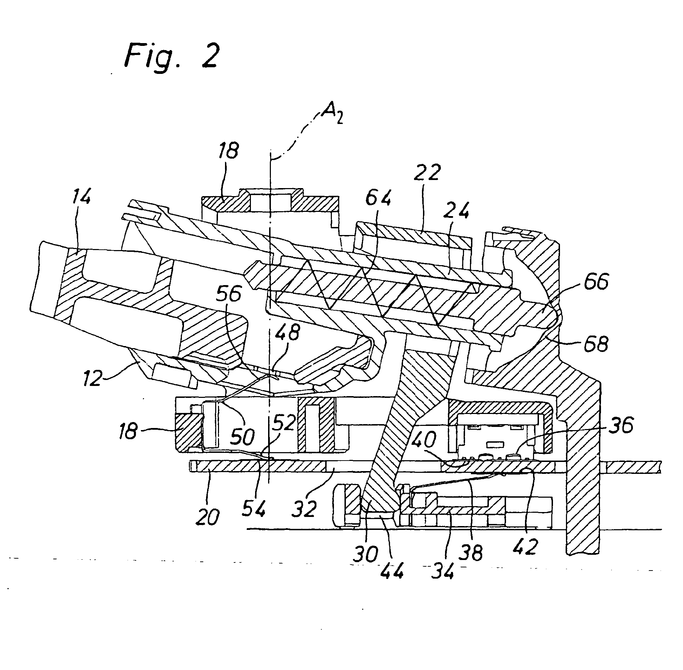

Die in den Figuren dargestellte Schalteinheit 10 eines Lenkstockschalters umfasst ein Fußteil 12 zur Aufnahme eines in den Figuren 1 und 2 abschnittsweise dargestellten Schalthebels 14. Der Schalthebel 14 ist in zwei quer, etwa senkrecht zueinander verlaufenden Schwenkebenen E1 und E2 schwenkbar gelagert, wobei die Ebene E₁ die Schnittebene der Figur 2 ist und die Ebene E₂ senkrecht zur Schnittebene gemäß Figur 2 verläuft. In der Ebene E₁ ist der Schalthebel 14 um die Achse A₁ schwenkbar gelagert. In der Ebene E₂ ist der Schwenkhebel 14 um die Achse A₂ schwenkbar gelagert. Bei der dargestellten Ausführungsform der Erfindung ist der Schalthebel 14 mit dem Fußteil 12 verrastbar ausgeführt. Erfindungsgemäß ist allerdings denkbar, dass der Schalthebel 14 mit dem Fußteil 12 auch einstückig ausgebildet sein kann.

Das Fußteil 12 ist über Lagerzapfen an einem Drehschaltglied 18 um die Achse A₁ schwenkbar angeordnet. Das Drehschaltglied 18 ist seinerseits auf einem Leiterbahnenträger 20 um die Achse A₂ schwenkbar angeordnet.

Ebenfalls an dem Drehschaltglied 18 ist um eine Achse A₃, die parallel zur Achse A₁ verläuft, ein Umlenkglied 22 schwenkbar gelagert angeordnet. Das Umlenkglied 22 ist hierbei mit dem Fußteil 12 über eine Getriebekopplung bewegungsgekoppelt. Das heißt, beim Verschwenken des Schalthebels 14, beziehungsweise des Fußteils 12, um die Achse A₁ wird das Umlenkglied 22 in einer vorgegebenen Getriebeübersetzung um die Achse A₃ verschwenkt. Die Getriebeübersetzung ist hierbei so gewählt, dass aus einer kleinen Bewegung des Schalthebels 14 eine große Bewegung des Umlenkgliedes 12 resultiert.

Zur Realisierung der Getriebeübersetzung weist das Fußteil 12 einen das Umlenkteil 22 weitgehend durchgreifenden Hebelabschnitt 24 auf, der zwei parallel zu den Achsen A₁ und A₃ verlaufende Getriebezapfen 26 aufweist. Die Getriebezapfen 26 ragen in zwei gegenüberliegende, an der Innenseite des Umlenkteils 22 vorgesehene Aufnahmenuten 28. Im montierten Zustand befinden sich die Getriebezapfen 26 vorzugsweise weitgehend spielfrei in den Aufnahmenuten 28, wobei dann die Getriebezapfen 26 auf der der Achse A₃ abgewandten Seite des Umlenkgliedes 22 in den Aufnahmenuten 28 angeordnet sind. In der Figur 1 ist die Achse der Getriebezapfen 26 mit dem Bezugszeichen A₄ angedeutet. Die Achsen A₁, A₃ und A₄ sind parallel zum Leiterbahnenträger 20 angeordnet. Die Achse A₂ verläuft senkrecht zum Leiterbahnenträger 20. Je nach Ausführungsform der Schalteinheit 10 kann allerdings das Fußteil 12 und das Umlenkglied 22 auch einstückig, ohne Getriebeübersetzung ausgebildet sein. Das Vorsehen einer Getriebeübersetzung, wie sie in den Figuren gezeigt und im Vorhergehenden beschrieben ist, hat den Vorteil, dass ein an dem Umlenkglied 22 vorhandener Umlenkhebel 30 beim Verschwenken des Schalthebels 14 um die Achse A₁ einen entsprechend weiteren Schaltweg zurücklegt.

Der Umlenkhebel 30 des Umlenkgliedes 22 durchgreift eine Aussparung 32 des Leiterbahnenträgers 20 und ist mit einem entlang einer Linie verschiebbar gelagerten Schiebeschaltglied 34 gekoppelt.

Sowohl das Drehschaltglied 18 als auch das Schiebeschaltglied 34 weisen Schaltkontakte 36 beziehungsweise 38 auf, die in Form von vorgespannten Schleifkontakten an auf dem Leiterbahnenträger 20 vorgesehenen Anschlusskontakten 40 beziehungsweise 42 anliegen.

Wie insbesondere aus den Figuren 1 und 2 deutlich wird, weist der eben ausgebildete Leiterbahnenträger 20 auf seiner dem Drehschaltglied 18 beziehungsweise dem Schalthebel 14 zugewandten Oberseite Anschlusskontakte 40 und auf seiner dem Schiebeschaltglied 34 zugewandten Unterseite Anschlusskontakte 42 auf. Die für ein Verschwenken des Schalthebels 14 um die Achse A₂ relevanten Anschlusskontakte 40 sind auf -der Oberseite des Leiterbahnenträgers 20 angeordnet. Die für ein Verschwenken des Schalthebels 14 um die Achse A₁ relevanten Anschlusskontakte 42 sind auf der Unterseite des Leiterbahnenträgers 20 angeordnet. Dadurch, dass der Leiterbahnenträger zum einen auf seiner Oberseite und zum anderen auf seiner Unterseite Anschlusskontakte 40, 42 aufweist, kann der Leiterbahnenträger 20 sehr klein ausgeführt werden beziehungsweise wird für die Anschlusskontakte 40, 42 sehr wenig Bauraum beansprucht. Bei einer Ausbildung der Erfindung, wie sie in den Figuren gezeigt ist, liegen die auf der Oberseite des Leiterbahnenträgers 20 vorgesehenen Anschlusskontakte 40 den auf der Unterseite vorgesehenen Anschlusskontakten 42 gegenüber. Hierdurch wird minimaler Bauraum für das Vorsehen der Anschlusskontakte 40, 42 beansprucht.

Die Aussparung 22 ist hierbei so ausgelegt, dass beim Verschwenken des Drehschaltgliedes 18 um die Achse A₂ der Umlenkhebel 30 nicht in Berührkontakt mit dem Leiterbahnenträger 20 kommt. Das freie Ende des Umlenkhebels 30 ist in einer Aufnahmenut 44 des Schiebeschaltgliedes 34 derart gelagert, dass ein Verschwenken des Umlenkgliedes 22, beziehungsweise des Umlenkhebels 30, um die Achse A₂ möglich ist, ohne dass das freie Ende des Umlenkhebels 30 an den Stirnseiten 46 der Aufnahmenut 44 zum Anschlag kommt.

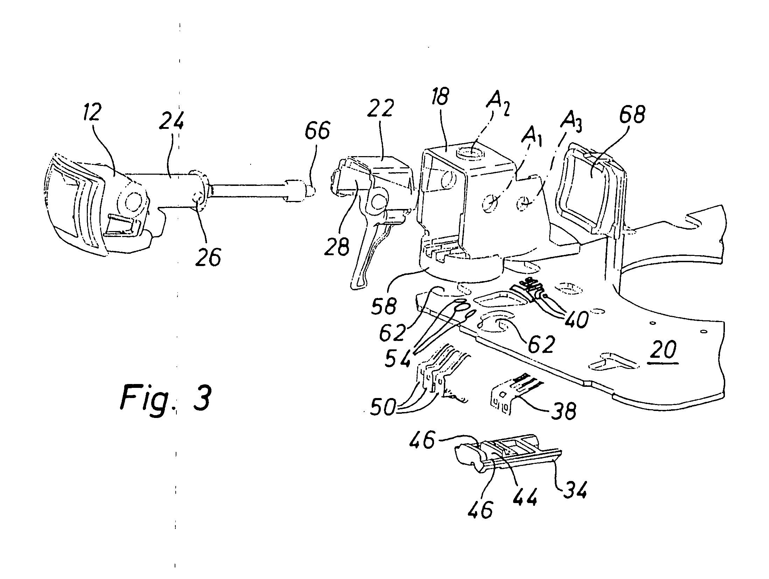

Wie aus Figur 2 deutlich wird, weist der dem Fußteil 12 zugewandte Bereich des Schalthebels 14 Kontaktstellen 48 auf, die von Kontaktelementen 50 in Form von vorgespannten Federkontakten abgegriffen werden. Über die Kontaktelemente 50 werden beispielsweise am freien Ende des Schalthebels 14 vorgesehene Schalteinheiten mit Strom versorgt, wobei an den Kontaktstellen 48 und 54 beim Betätigen des Schalthebels 14 vorteilhafterweise keine Schaltvorgänge stattfinden. Die Kontaktelemente 50 sind am Drehschaltglied 18, und damit gegenüber der Schwenkbewegung des Fußteils 12 beziehungsweise des Schalthebels 14 um die Achse A₁, ortsfest angeordnet. Die dem Schalthebel 14 abgewandten Enden 52 der Kontaktelemente 50 beaufschlagen unter federnder Vorspannung Kontaktstellen 54 des Leiterbahnenträgers 20. Dabei sind die dem Schalthebel 14 zugewandten freien Enden 56 lotrecht zum Leiterbahnenträger 20 unterhalb der Schwenkachse A₁ angeordnet. Außerdem sind die dem Leiterbahnenträger 20 zugewandten Enden 52 der Kontaktelemente 50 lotrecht zum Leiterbahnenträger 20 unterhalb der Schwenkachse A₁ angeordnet. Ferner liegen die freien Enden 52 der Kontaktelemente 50 im Bereich der Drehachse A₂ des Drehschaltgliedes 18. Dabei erfolgt die Lagerung des Drehschaltgliedes 18 exzentrisch. Das Drehschaltglied 18 weist auf seiner dem Leiterbahnenträger 20 zugewandten Seite hierfür einen Ringabschnitt 58 auf, der mittels an dem Leiterbahnenträger 20 vorgesehenen Führungsstegen 60, insbesondere in Form von Ringabschnitten, in seiner radialen Lage weitgehend spielfrei gehalten wird. Die Führungsstege 60 können hierbei beispielsweise an dem Leiterbahnenträger 20 angeordnet sein, oder an einem den Leiterbahnenträger 20 durchgreifenden Gehäuseabschnitt des Lenkstockschalters. In der Figur 1 sind die Führungsstege 60 angedeutet. In der Figur 3 durchgreifen die Führungsstege 60 am Leiterbahnenträger 20 vorgesehene Aussparungen 62.

Dadurch, dass zum einen die dem Schalthebel 14 zugewandten freien Enden 56 und die dem Leiterbahnenträger 20 zugewandten freien Enden 52 der Kontaktelemente 50 lotrecht zum Leiterbahnenträger 20 unterhalb der Schwenkachse A₁ liegen, wird vorteilhafterweise erreicht, dass einerseits beim Verschwenken des Schalthebels 14 um die Achse A₁ lediglich eine relativ geringe Bewegung der Kontaktstellen 48 durch die freien, vorgespannten Enden 56 der Kontaktstellen ausgeglichen werden muss, und andererseits beim Verschwenken des Schalthebels 14 um die Achse A₂ die freien Enden 52 der Kontaktelemente 50 einen sehr geringen Weg gegenüber den Kontaktstellen 54 zurücklegen.

Die Schaltkontakte 36, die beim Schwenken des Schalthebels 14 um die Achse A₂ je nach Arbeitstellung des Schalthebels 14 verschiedene Anschlusskontakte kontaktieren, liegen fern von der Achse A₂. Hierdurch legen die Schaltkontakte 36 beim Verschwenken des Schalthebels 14 um die Achse A₂ einen relativ großen Weg zurück. Wie bereits erwähnt, legen die Schaltkontakte 38 des Schiebeschaltglieds 34 aufgrund der Getriebekopplung zwischen dem Fußteil 12 und dem Umlenkglied 22 beim Verschwenken des Schalthebels 14 um die Achse A₁ ebenfalls einen relativ weiten Weg zurück. Je nach Arbeitstellung des Schalthebels 14 werden entsprechende Anschlusskontakte 40, 42 miteinander über die Schaltkontakte 36, 38 verbunden.

Um den Schalthebel 14 in definierten, vorgegebenen Arbeitstellungen zu halten, ist eine mit einer Feder 64 vorgespannte Nocke 66 vorgesehen, die eine gehäuseseitige Schaltkulisse 68 beaufschlagt.

## Patentansprüche

1. Lenkstockschalter für ein Fahrzeug, mit einer Schalteinheit (10), deren in zwei quer, insbesondere etwa senkrecht zueinander verlaufenden Schwenkebenen (E₁, E₂) schwenkbar gelagerter Schalthebel (14) mit Schaltkontakte (36, 38) aufweisenden Schaltgliedern (18, 34) derart gekoppelt ist, dass die Schaltkontakte (36, 38) je nach Arbeitstellung des Schalthebels (14) Anschlusskontakte (40, 42) eines Leiterbahnenträgers (20) beaufschlagen, wobei der den Schaltgliedern (18, 34) zugewandte Bereich des Schalthebels (14) Kontaktstellen (48) aufweist, die von schaltgliedseitig angeordneten, eine elektrische Verbindung zum Leitbahnenträger (20) herstellenden Kontaktelementen (50) abgegriffen werden, wobei die dem Schalthebel (14) zugewandten Enden (56) der Kontaktelemente (50) in etwa lotrecht zum Leiterbahnenträger (20) in etwa unterhalb der parallel zum Leiterbahnenträger (20) verlaufenden Schwenkachse (A₁) des Schalthebels (14) die Kontaktstellen (48) beaufschlagen, und wobei die Kontaktelemente (50) an einem um eine senkrecht zum Leiterbahnenträger (20) verlaufende Drehachse (A₂) drehbar gelagerten Drehschaltglied (18) angeordnet sind, **dadurch gekennzeichnet, dass** die dem Leiterbahnenträger (20) zugewandten Enden (52) der Kontaktelemente (50) zentrisch im Bereich der Drehachse (A₂) des Drehschaltglieds (18) liegen.

2. Lenkstockschalter nach Anspruch 1, **dadurch gekennzeichnet, dass** die den Leiterbahnenträger (20) kontaktierenden Enden (52) der Kontaktelemente (50) in etwa lotrecht zum Leiterbahnenträger (20) in etwa unterhalb der parallel zum Leiterbahnenträger (20) verlaufenden Schwenkachse (A₁) des Schalthebels (14) angeordnet sind.

3. Lenkstockschalter nach Anspruch 1 oder 2, **dadurch gekennzeichnet, dass** das Drehschaltglied (18) auf dem Leiterbahnenträger (20) exzentrisch gelagert angeordnet ist.

4. Lenkstockschalter nach einem der vorhergehenden Ansprüche, **dadurch gekennzeichnet, dass** die Kontaktelemente (50) gegenüber der Schwenkbewegungen des Schalthebels (14) um die Schwenkachse (A₁) ortsfest angeordnet sind, wobei die dem Schalthebel (14) zugewandten Enden (56) der Kontaktelemente (50) unter federnder Vorspannung der Schwenkbewegung der Kontaktstellen (48) folgen und diese beaufschlagen.

5. Lenkstockschalter nach einem der vorhergehenden Ansprüche, **dadurch gekennzeichnet, dass** der Leiterbahnenträger (20) auf seiner Oberseite und seiner Unterseite Anschlusskontakte (40, 42) aufweist, die je nach Arbeitstellung des Schalthebels (14) entsprechend kontaktiert werden.

6. Lenkstockschalter nach einem der vorhergehenden Ansprüche, **dadurch gekennzeichnet, dass** die für ein Bewegen des Schalthebels (14) in der einen Schwenkebene (E₂ beziehungsweise E₁) liegenden relevanten Anschlusskontakte (40 beziehungsweise 42) auf der Oberseite bzw. Unterseite des Leiterbahnenträgers (20) liegen, und dass die für ein Bewegen des Schalthebels (14) in der anderen Schwenkebene (E₁ beziehungsweise E₂) relevanten Anschlusskontakte (42 beziehungsweise 40) auf der Unterseite bzw. Oberseite des Leiterbahnenträgers(20) liegen.

7. Lenkstockschalter nach einem der vorhergehenden Ansprüche, **dadurch gekennzeichnet, dass** ein als Schiebeschaltglied (34) ausgebildetes Schaltglied vorgesehen ist, das über einen Umlenkmechanismus (22, 30) mit dem Schalthebel (14) derart gekoppelt ist, dass durch Bewegen des Schalthebels (14) in einer Schwenkebene (E₁), die insbesondere senkrecht zum Leiterbahnenträger (20) verläuft, das Schiebeschaltglied (34) entlang einer Linie verschiebbar an dem Leiterbahnenträger (20) angeordnet ist.

8. Lenkstockschalter nach Anspruch 7, **dadurch gekennzeichnet, dass** der Umlenkmechanismus ein um eine zum Leiterbahnenträger (20) parallele Achse (A₁) schwenkbares Fußteil (12) zur Anordnung des dem S Fußteil (12) zugewandten Endes des Schalthebels (14) und ein mit dem Fußteil (12) einstückig ausgebildetes oder bewegungsgekoppeltes Umlenkglied (22) aufweist, welches mit dem Schiebeschaltglied (34) gekoppelt ist.

9. Lenkstockschalter nach Anspruch 7 oder 8, **dadurch gekennzeichnet, dass** das Fußteil (12) als ein vom Schalthebel (14) separates Bauteil ausgebildet ist.

10. Lenkstockschalter nach Anspruch 7, 8 oder 9, **dadurch gekennzeichnet, dass** das Fußteil (12) und/oder das Umlenkglied (22) am Drehschaltglied (18) um eine parallel zum Leiterbahnenträger (20) verlaufende Achse (A₁, A₃) schwenkbar gelagert angeordnet ist.

11. Lenkstockschalter nach Anspruch 9 bis 10, **dadurch gekennzeichnet, dass** die Bewegungskopplung zwischen dem Fußteil (12) und dem Umlenkglied (22) eine Getriebekopplung ist.

12. Lenkstockschalter nach Anspruch 10 bis 11, **dadurch gekennzeichnet, dass** das Umlenkglied (22) den Leiterbahnenträger (20) hinter-, um- oder durchgreift und dass das Schiebeschaltglied (34) auf der anderen Seite des Leiterbahnenträgers (20) als das Drehschaltglied (18) angeordnet ist.

13. Lenkstockschalter nach einem der vorhergehenden Ansprüche, **dadurch gekennzeichnet, dass** das Drehschaltglied (18) in dem der Drehachse (A₂) fern gelegenen Bereich Schaltkontakte (36) aufweist.

## Claims

1. Steering column switch for a vehicle comprising a switching unit (10) whose switch lever (14) which is mounted pivotable in two pivot planes (E₁, E₂) running transversely, and in particular approximately perpendicularly, to one another is coupled to switch members (18, 34) having switching contacts (36, 38) in such a manner that, depending on the working position of the switch lever (14), the switching contacts (36, 38) accordingly impinge upon connection contacts (40, 42) of a conducting track support (20), wherein the region of the switch lever (14) facing towards the switch members (18, 34) has contact sites (48) which are contacted by contact elements (50) arranged on the switch member side and which create an electrical connection with the conducting track support (20), wherein the ends (56) of the contact elements (50) facing towards the switch lever (14) impinge upon the contact sites (48) approximately perpendicularly to the conducting track support (20) approximately beneath the pivot axis (A₁) of the switch lever (14) which axis extends parallel to the conducting track support (20), and wherein the contact elements (50) are arranged on a rotary switch member (18) which is mounted pivotable about a pivot axis (A₂) which extends perpendicularly to the conducting track support (20), **characterised in that** the ends (52) of the contact elements (50) facing towards the conducting track support (20) lie centrally in the region of the pivot axis (A₂) of the rotary switch member (18).

2. Steering column switch according to claim 1, **characterised in that** the ends (52) of the contact elements (50) which contact the conducting track support (20) are arranged approximately perpendicularly to the conducting track support (20) approximately beneath the pivot axis (A₁) of the switch lever (14), said pivot axis running parallel to the conducting track support (20).

3. Steering column switch according to claim 1 or 2, **characterised in that** the rotary switch member (18) is arranged eccentrically mounted on the conducting track support (20).

4. Steering column switch according to one of the preceding claims, **characterised in that** the contact elements (50) are arranged fixed relative to the pivot movements of the switch lever (14) about the pivot axis (A₁), wherein the ends (56) of the contact elements (50) which face towards the switch lever (14) follow the pivot movements of the contact sites (48) under sprung pretension and impinge upon said contact sites.

5. Steering column switch according to one of the preceding claims, **characterised in that** the conducting track support (20) has connection contacts (40, 42) on its upper side and its underside, which are contacted depending on the working position of the switch lever (14).

6. Steering column switch according to one of the preceding claims, **characterised in that** the connection contacts (40 or 42) relevant for a movement of the switch lever (14) in one pivot plane (E₂ or E₁) are situated on the upper side or the underside of the conducting track support (20), and that the connection contacts (42 or 40) relevant for a movement of the switch lever (14) in the other pivot plane (E₁ or E₂) are situated on the underside or the upper side of the conducting track support (20).

7. Steering column switch according to one of the preceding claims, **characterised in that** a switch member configured as a sliding switch member (34) is provided and is coupled via a deflecting mechanism (22, 30) to the switch lever (14) in such a manner that, by moving the switch lever (14) in a pivot plane (E₁) which extends, in particular, perpendicularly to the conducting track support (20), the sliding switch member (34) is arranged displaceable along a line on the conducting track support (20).

8. Steering column switch according to claim 7, **characterised in that** the deflecting mechanism has a foot member (12) which can be pivoted about an axis (A₁) parallel to the conducting track support (20) for arranging the end of the switch lever (14) which faces towards the foot member (12), and has a deflecting member (22) which is formed in one piece with the foot member (12) or has its movement coupled to said foot member; said deflecting member being coupled to the sliding switch member (34).

9. Steering column switch according to claim 7 or 8, **characterised in that** the foot member (12) is configured as a component separate from the switch lever (14).

10. Steering column switch according to claim 7, 8 or 9, **characterised in that** the foot member (12) and/or the deflecting member (22) is arranged on the rotary switch member (18) mounted pivotable about an axis (A₁, A₃) extending parallel to the conducting track support (20).

11. Steering column switch according to claim 9 or 10, **characterised in that** the movement coupling between the foot member (12) and the deflecting member (22) is a gearing coupling.

12. Steering column switch according to claim 10 or 11, **characterised in that** the deflecting member (22) engages behind, round or through the conducting track support (20) and that the sliding switch member (34) is arranged on the other side of the conducting track support (20) from the rotary switch member (18).

13. Steering column switch according to one of the preceding claims, **characterised in that** the rotary switch member (18) has switching contacts (36) in the region remote from the pivot axis (A₂).

## Revendications

1. Commutateur de colonne de direction pour un véhicule, comprenant une unité de commutation (10), dont un levier de vitesse (14) logé de façon basculante dans deux plans de pivotement (E₁, E₂) agencés transversalement, en particulier à peu près perpendiculairement entre eux est couplé avec des éléments de commutation (18, 34) présentant des contacts de commutation (36, 38), de telle sorte que les contacts de commutation (36, 38) sollicitent des contacts de raccordement (40, 42) d'un support de piste conductrice (20) selon la position de travail du levier de vitesse (14), la zone, tournée vers les éléments de commutation (18, 34), du levier de vitesse (14) présentant des points de contact (48), qui sont saisis par des éléments de contact (50) disposés côté élément de commutation et établissant une liaison électrique avec le support de piste conductrice (20), les extrémités libres (56), tournées vers le levier de vitesse (14), des éléments de contact (50) sollicitant les points de contact (48) à peu près perpendiculairement au support de piste conductrice (20) à peu près au-dessous de l'axe de pivotement (A₁), agencé parallèlement au support de piste conductrice (20), du levier de vitesse (14), et les éléments de contact (50) étant disposés sur l'élément de commutation rotatif (18) logé de façon à pouvoir tourner autour d'un axe de rotation (A₂) disposé perpendiculairement au support de piste conductrice (20), **caractérisé en ce que** les extrémités (52), tournées vers le support de piste conductrice (20), des éléments de contact (50°) sont disposées de façon centrée dans la zone de l'axe de rotation (A₂) de l'élément de commutation rotatif (18).

2. Commutateur de colonne de direction selon la revendication 1, **caractérisé en ce que** les extrémités (52), établissant un contact avec le support de piste conductrice (20), des éléments de contact (50) sont disposées à peu près perpendiculairement au support de piste conductrice (20) à peu près au-dessous de l'axe de pivotement (A₁), agencé parallèlement au support de piste conductrice (20), du levier de vitesse (14).

3. Commutateur de colonne de direction selon la revendication 1 ou 2, **caractérisé en ce que** l'élément de commutation rotatif (18) est disposé sur le support de piste conductrice (20) et logé de façon excentrée.

4. Commutateur de colonne de direction selon l'une quelconque des revendications précédentes, **caractérisé en ce que** les éléments de contact (50) sont disposés de façon fixe par rapport aux mouvements de basculement du levier de vitesse (14) autour de l'axe de pivotement (A₁), les extrémités (56), tournées vers le levier de vitesse (14), des éléments de contact suivant le mouvement de basculement des points de contact (48) sous pré-tension élastique et sollicitant ces éléments.

5. Commutateur de colonne de direction selon l'une quelconque des revendications précédentes, **caractérisé en ce que** le support de piste conductrice (20) présente sur son côté supérieur et son côté inférieur des éléments de contact de raccordement (40, 42) qui établissent un contact approprié en fonction de la position de travail du levier de vitesse (14).

6. Commutateur de colonne de direction selon l'une quelconque des revendications précédentes, **caractérisé en ce que** les contacts de raccordement (40 et 42) importants pour un déplacement du levier de vitesse (14) dans l'un des plans de basculement (E₂ ou E₁) sont situés sur le côté supérieur ou le côté inférieur du support de piste conductrice (20), et **en ce que** les contacts de raccordement (42 et 40) importants pour un déplacement du levier de vitesse (14) dans l'autre plan de pivotement (E₁ ou E₂) sont situés sur le côté inférieur ou le côté supérieur du support de piste conductrice (20).

7. Commutateur de colonne direction selon l'une quelconque des revendications précédentes, **caractérisé en ce qu'**un élément de commutation réalisé comme élément de commutation coulissant (34) est prévu, lequel est couplé au moyen d'un mécanisme de renvoi (22, 30) au levier de commutation (14) de telle sorte que, par le déplacement du levier de vitesse (14) dans un plan de pivotement (E₁), qui est agencé en particulier perpendiculairement au support de piste conductrice (20), l'élément de commutation coulissant (34) est disposé sur le support de piste conductrice (20) de façon coulissante le long d'une ligne.

8. Commutateur de colonne de direction selon la revendication 7, **caractérisé en ce que** le mécanisme de renvoi présente une partie de base (12) pouvant pivoter autour d'un axe (A₁) parallèle au support de piste conductrice (20) pour l'agencement de l'extrémité, tournée vers la partie de base (12), du levier de vitesse (14) et un élément de renvoi (22) conçu d'une seule pièce ou couplé au niveau du mouvement avec la partie de base (12), qui est couplé avec l'élément de commutation coulissant (34).

9. Commutateur de colonne de direction selon la revendication 7 ou 8, **caractérisé en ce que** la partie de base (12) est conçue comme un composant séparé du levier de vitesse (14).

10. Commutateur de colonne de direction selon la revendication 7, 8 ou 9, **caractérisé en ce que** la partie de base (12) et/ou l'élément de renvoi (22) est disposé sur l'élément de commutation rotatif (18) et logé de façon à pouvoir basculer autour d'un axe (A₁, A₃) agencé parallèlement au support de piste conductrice (20).

11. Commutateur de colonne de direction selon la revendication 9 ou 10, **caractérisé en ce que** le mouvement de couplage entre la partie de base (12) et l'élément de renvoi (22) est un couplage par transmission.

12. Commutateur de colonne de direction selon les revendications 10 et 11, **caractérisé en ce que** l'élément de renvoi (22) saisit à l'arrière, entoure ou traverse le support de piste conductrice (20) et **en ce que** l'élément de commutation coulissant (34) est disposé sur le côté du support de piste conductrice (20) autre que l'élément de commutation rotatif (18).

13. Commutateur de colonne de direction selon l'une quelconque des revendications précédentes, **caractérisé en ce que** l'élément de commutation rotatif (18) présente des contacts de commutation (36) dans la zone éloignée de l'axe de rotation (A₂).
